# EUROPEAN PATENT APPLICATION

(11) **EP 0 545 842 A1**
(43) Date of publication of application: **09.06.1993**
(21) Application number: 92500158.8
(22) Date of filing: 01.12.1992
(51) Int. Cl.: F02B 29/04, F28D 7/10, F28D 1/053

(54) **Mixed heat exchanger for air intake circuits in internal combustion engines**

(30) Priority: 03.12.1991 ES 9102705
(71) Applicant: Targa Pascual, Juan, E-08006 Barcelona (ES)
(72) Inventor: Targa Pascual, Juan, E-08006 Barcelona (ES)

(57) **Abstract**

The device is characteized in that it is provided consecutively and in a single, encompassing housing unit, with a first mixed heat exchange circuit, combustion air (1,2,22)/cooling water (9,76) and cooling water/ambient air, and a second heat exchange section, cooling water (14,15)/ambient air, the cooling water circuit being completed by a recirculation circuit which comprises a force pump (19) and an intermediate storage tank (18).

## Description

The present invention discloses a mixed heat exchanger circuit for intake air in engines and in particular internal combustion or diesel engines.

The heat exchanger which forms the object of the present invention is designed to cool the air supplied to the engine particularly in cases where a compressor is fitted, whether it be a turbo compressor or a volumetric compressor, in order to reduce the temperature of the intake air and thus increase its weight, thereby making it possible to achieve a corresponding increase in the power supplied by the engine.

Systems for cooling the mixture entering the engine from the turbo compressor or for cooling,the air entering the carburettor or mixture injection system are already known. Said systems are normally provided with a simple circulating water radiator to reduce the temperature of the mixture already formed or to reduce the temperature of the air which has entered, and do not contribute additional technical characteristics to the cooling system itself since they consist simply of applying traditional, known radiator cooling devices to cool the gases to be fed to the engine.

The heat exchanger which forms the object of the present invention introduces original characteristics by employing an air and water mixed cooling system complemented by a heat exchanger circuit for the cooling water. In this way, according to the present invention, the intake air coming from the compressor passes through a circuit in which exchange of heat between the intake air and the water-fed cooling circuit takes place, said cooling circuit being in turn provided with means of heat exchange with the outside air. For this reason the main heat exchanger is said to be mixed, since two heat exchange processes take place: air supply/water and cooling water/outside air. The heat exchanger is completed by a section which is designed exclusively to cool the water used in the mixed circuit and which then passes to the cooling circuit itself. In this complementary heat exchanger the passage of ambient air which is set up reduces the temperature of the water used as a refrigerant in the first cycle or part of the exchanger.

The recirculation circuit comprises a force pump and an intermediate storage tank.

By means of the heat exchanger of the present invention it is possible to achieve a high degree of heat exchange with very low exchanger volume and weight, making it particularly suitable for fitting to lorries and other motor vehicles.

In order that the invention may be better understood, the accompanying drawings represent an example of the heat exchanger which forms the object of the present invention.

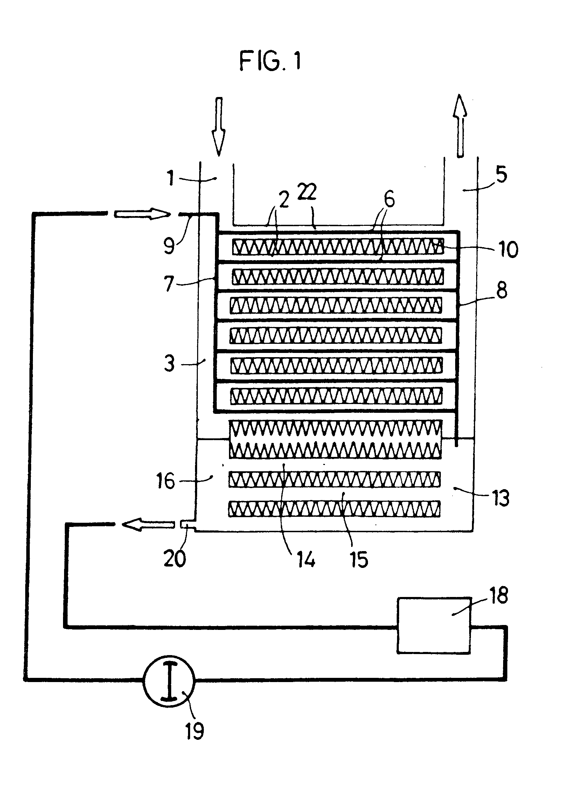

Figure 1 is a schematic view of the heat exchanger assembly.

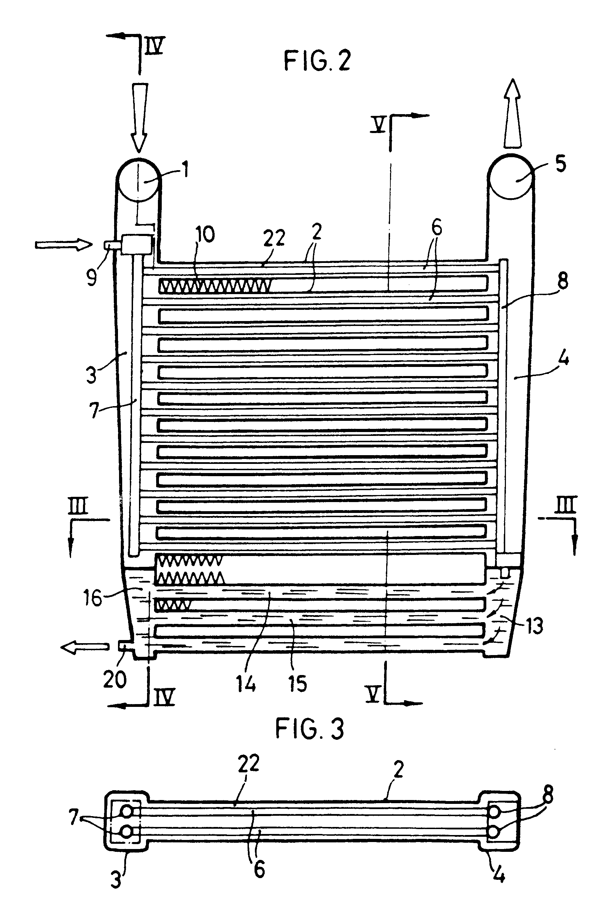

Figures 2 and 3 each show sections of the heat exchanger of the present invention.

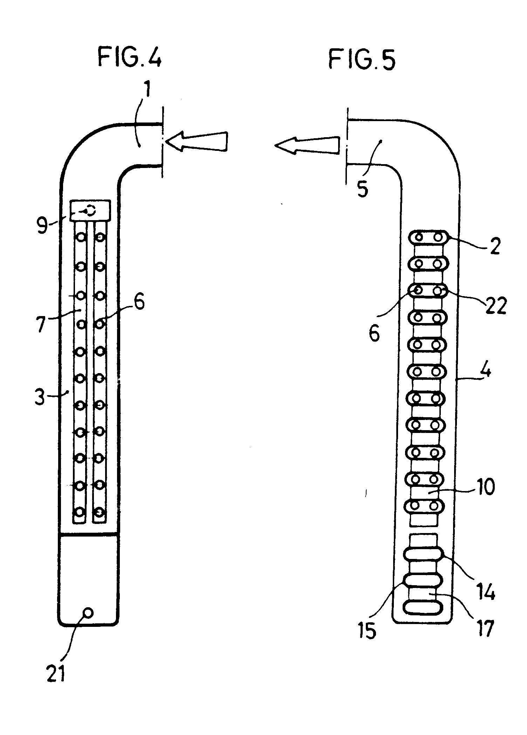

Figures 4 and 5 each represent details of the sectional planes taken across IV-IV and V-V.

Figures 6 and 7 are views showing constructional details of the mixed circuit and the fins of the heat exchanger.

Figure 8 represents a schematic view of the heat exchanger assembly designed to be fitted in a horizontal position.

As the figures show, the heat exchanger of the present invention is designed to cool the air which flows from a compressor, such as a turbo compressor or a volumetric compressor, and which is then fed to the intake circuit of an internal combustion engine. The air coming from the compressor enters the exchanger through the pipe 1 and proceeds to a series of horizontal channels 2 via a distribution chamber 3, said channels supplying an outlet chamber 4 and an outlet pipe 5 which in turn supplies the engine.

A cooling water circuit is designed to provide the first exchange phase, air supply/water, by means of a series of tubes 6 provided inside the pipes 2 and connected to a inlet distribution branch or manifold 7 and to a second outlet manifold 8, the manifold 7 being connected to the pipe 9 coming from the water recirculation circuit and the manifold 8 being connected, as described below, to the section where the heat exchange between the cooling water and ambient air takes place.

Inside the pipes 2 is a plurality of fins 21 which assist and accelerate the exchange of heat between the air which circulates within the pipe 2 and the water in the tube 6.

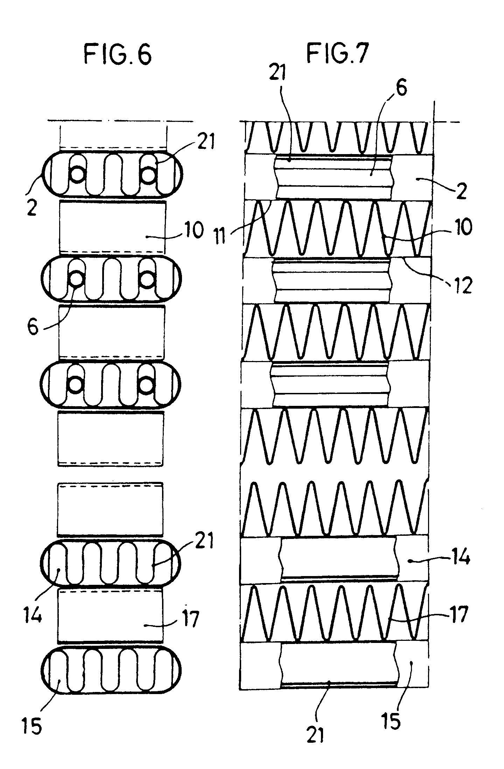

Apart from the aforementioned exchange of heat between water pipes 6 and the and the air pipes 2, the heat exchanger of the present invention is provided with a system of heat exchange between each pair of air channels 2, consisting of a wide intermediate opening 22 situated between each two consecutive pipes 2, fins 10 being provided within said openings to allow the exchange of heat between the outside air which passes over said fins and the pipes 2. In order to achieve this the fins 10 have special thermal conductivity properties and are firmly fixed by welding to the walls of the pipes 2 which surround each of the openings 22. The way in which the fin 10 is fitted may vary but for the purpose of the present invention it is preferable that it be fitted as shown in figure 7, where said fin 10 consists of a zigzag plate whose vertices are welded to the walls 11 and 12 of the corresponding opening 22 situated between two consecutive engine air supply passages.

By means of the mixed heat exchanger which has been described, it is possible to achieve a high degree of heat elimination from the air supplied to the engine with a very low exchanger volume, meaning that the weight of the unit is also considerably reduced.

The heat exchanger of the present invention is completed by a section in which the cooling water used in the mixed circuit is cooled by contact with the ambient air. Said section consists of a chamber 13 which is a prolongation of the housing of the mixed exchanger section, and inside which chambers 14 and 15, which may vary in number, are provided to convey the water towards a final collection chamber 16 from which the water proceeds to the recirculation circuit. In order to achieve exchange of heat with the ambient air, said section is provided with cooling fins 17 for the ambient air which are firmly fixed in the openings formed between each pair of water pipes such as 14 and 15. Said fins may be similar those described for the openings 22 in the case of the mixed exchanger section.

According to the present invention, the water recirculation circuit is incorporated by means of a pipe connected to the inlet 9 and which comprises an expansion vessel or storage tank 18 and a force pump 19. Said circuit is connected to the outlet 20 of the collection chamber 16 of the lower part of the heat exchanger.

The fact that the cooling water is forced around the aforementioned mixed circuit by the action of the pump 19 gives rise to an additional increase in the exchange of heat between the air which supplies the engine and the ambient air.

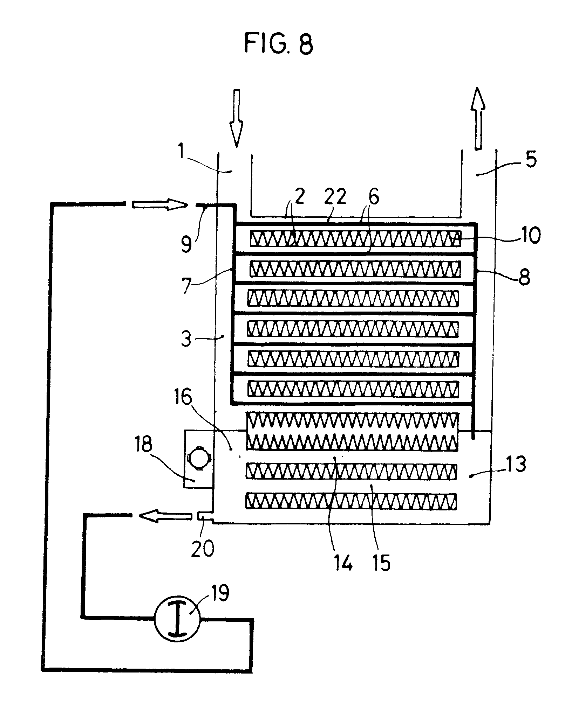

The exchanger may be fitted in a horizontal position, in which case the storage tank 18 is provided as an integral part of the water collection chamber 16, as shown in figure 8.

Any detail which does not affect, alter, change or modify the basic concept of the exchanger described falls within the scope of the present invention.

## Claims

1. A mixed heat exchanger for air intake circuits in internal combustion engines, characterized in that it is provided consecutively and in a single, encompassing housing unit, with a first mixed heat exchange circuit, combustion air/cooling water and cooling water/ambient air, and a second heat exchange section, cooling water/ambient air, the cooling water circuit being completed by a recirculation circuit which comprises a force pump and an intermediate storage tank.

2. A mixed heat exchanger for air intake circuits in internal combustion engines according to claim 1, characterized in that the mixed heat exchanger comprises a housing provided with a collecting chamber for the air coming from a compressor and which supplies a series of mutually parallel pipes connected to a second collecting chamber from which originates a pipe to convey the air to the engine, there being provided inside each of the engine air supply passage chambers a corresponding pipe of the cooling water system, as well as a plurality of cooling fins which form part of a distribution collector provided in the initial collection chamber for the air coming from the compressor and a second collector provided in the engine air outlet collector.

3. A mixed heat exchanger for air intake circuits in internal combustion engines according to claim 1, characterized in that intermediate openings are provided between each pair of consecutive air passage chambers, and in each of which is provided a fin which is integral with the surrounding walls of the air chambers so that the exchange of heat with the ambient air surrounding said fins can take place.

4. A mixed heat exchanger for air intake circuits in internal combustion engines according to claim 1, characterized in that the cooling water/ambient air heat exchange section consists of a lower housing which forms a single assembly with the mixed heat exchanger and which comprises a cooling water collection chamber and a series of horizontal conductors which are connected to an outlet chamber connected to the recirculation circuit, a plurality of fins being provided in the intermediate openings between each pair of cooling water passage chambers.
